# EUROPEAN PATENT SPECIFICATION

(11) **EP 4 025 061 B1**
(45) Date of publication and mention of the grant of the patent: **20.09.2023**
(21) Application number: 20771368.6
(22) Date of filing: 07.09.2020
(51) Int. Cl.: A23C 19/028, A23C 19/076, A23C 19/02, A23C 19/05, A23C 9/142

(54) **METHOD OF MAKING FRENCH-TYPE GOAT CHEESE**
VERFAHREN ZUR HERSTELLUNG VON ZIEGENKÄSE NACH FRANZÖSISCHER ART
PROCÉDÉ DE FABRICATION DE FROMAGE DE CHÈVRE DE TYPE FRANÇAIS

(30) Priority: 05.09.2019 EP 19195715
(43) Date of publication of application: 13.07.2022
(73) Proprietor: Dairy Protein Cooperation Food B.V., 2411 HS Bodegraven (NL)
(72) Inventor: LAVRIJSEN, Bas Willem Maarten, 2411 HS Bodegraven (NL); BENJAMINS, Frédéric, 2411 HS Bodegraven (NL)
(74) Representative: V.O.
(86) International application number: PCT/NL2020/050550
(87) International publication number: WO 2021/045624

(56) References cited:
- WO-A1-2009/059266
- WO-A1-2012/110706
- ES-A1- 2 125 205
- Anonymous: "I) Initiation à la Fabrication - Le Fromage de chèvre de a à z", , 18 December 2016 (2016-12-18), XP055666429, Retrieved from the Internet: URL:https://web.archive.org/web/2016121811 2958/https://fromagedechevre.weebly.com/i- initiation-agrave-la-fabrication.html [retrieved on 2020-02-07]

## Description

### FIELD OF THE INVENTION

The invention disclosed herein relates to a method of making French-type (or French-style) goat cheese. Particularly, the invention relates to treating goat milk used in the production of soft-type goat cheese.

### BACKGROUND

Various different processes exist in which milk is subjected to steps such as fermentation, acidification, concentration, and/or coagulation. Traditionally, viz. for thousands of years, such processes have served to preserve milk ingredients for longer periods of time than in milk itself. In more recent times, an additional industrial desire is to obtain optimal value from milk production by putting as high an amount of milk ingredients to use as possible.

A background reference in this respect is, e.g., WO 2018/028764. This relates to the production of infant formula. Thereby, as is well-known, starting from cow's milk, the ratio of the main dairy proteins, viz. whey proteins and casein, is generally adapted so as to better resemble the ratio thereof as found in human milk. With said ratio being about 80:20 in cow's milk, but usually 40:60 in infant formula, this adaptation results in an excess casein stream. WO 2018/028764 proposes an additional use for the casein excess, by combining the production of infant formula with that of an acidic dairy product. Thereby WO 2018/028764 puts to use acid whey, as well as lactose sourced from acid whey. The acidic dairy products produced are typically based on milk fermentation and concentration, viz. particularly strained yoghurts such as Greek-style yoghurt and acid cheeses such as cottage cheeses. Essentially, WO 2018/028764 sees advantage in these products for the reason that during the production thereof acid whey is formed as by-product. In the processes of WO 2018/028764 this acid whey can be used as a lactose source.

WO 2018/028764 thus presents acid whey as a useful ingredient in its process for making infant formula. Generally, however, acid whey is considered a waste stream, and in many instances it will not be well possible to actually put this to use in conjunction with the production of infant formula.

One such instance in particular is the production of French-type goat cheese. The production of French-type goat cheese is an area in which the generation of acid whey waste streams is particularly problematic due to the relatively large amounts thereof. However, acid whey waste, from goat milk cannot be just added to processes for producing infant formula. Infant formula being mostly produced from cow's milk, the addition of ingredients from goat milk would complicate the existing production processes. Further, the traditional production of French-type goat cheese takes place in scattered dairy farms rather than large industrial complexes. The mere transportation of large amounts of acid whey waste streams already is economically prohibitive for putting these streams to any use.

Generally, two types of goat cheese exist that are produced via coagulation of milk proteins.

One is a semi-hard (Gouda) type of cheese, based on milk coagulation by the addition of coagulating enzymes such as rennet. The other type of goat cheese is a soft cheese, recognized in the field as "French-type goat cheese" or "Chevre". The manufacturing of this cheese is based on milk coagulation by a combined action of coagulating enzymes (rennet) and acidification, whereby the acidification is to a pH lower than that in other types of cheese, particularly to a pH of below 5. . Typically, in the manufacturing of French-type goat cheese, whey is drained off by keeping the coagulated milk in bags. These bags, in French called Filtreberge, will generally be hung, so as to have gravity-based flow of whey. Also, these bags can be compressed so as to press off the whey. Generally, a combination of the two is applied. The cheeses are ripened for a short period, generally of from 10 days to 6 weeks, such as 2 weeks to 4 weeks, and can be provided with a white moldcurst, generally by ripening at the surface, e.g., after spraying a suitable bacterial culture on it.

By way of background a further dairy product is mentioned, which is generally indicated as "fresh cheese" or "cream cheese", and for which sometimes also the term "soft cheese" is used. These dairy products are based on milk concentration rather than milk coagulation. These products are not to be confused with the aforementioned "French-type" goat cheese. In fact, whilst goat milk is not excluded, these products are more typically made from cow milk. Particularly, the manufacturing of these products does not involve enzymatic coagulation. It generally does involve acidification of milk, after which a solid-liquid separation typically occurs by centrifuging or UltraFiltration. The manufacturing of fresh cheese does not involve a ripening period; the product is ready after production. This production process, which is based on concentration of milk rather than on coagulation, is fundamentally different from that of French-type goat cheese, which essentially involves enzymatic coagulation and a certain ripening period. The manufacturing of fresh cheese in fact comes closer to other products in which milk is concentrated rather than coagulated, such as Greek yoghurt, quark, skyr, and the like.

The present invention specifically relates to French-type goat cheese. Other than with Gouda cheeses or fresh cheeses, which are frequently made of cow's milk, the field of the art related to the production of French-type goat cheese is specifically limited to goat milk.

In marked deviation from the aforementioned fresh cheese production method, the production method of French-type goat cheese has several of the characteristics of the production of Gouda type cheese. The process thus involves steps such as: acidification, typically with starter bacteria followed by curdling, typically by enzymatic coagulation, and compressing of the curd so as to drive off whey. An essential difference with Gouda type cheese relates to the stage at which whey is separated during the acidification. For Gouda cheese, this generally occurs at a pH of about 6 , such as pH 5.9 to 6.3, typically at a pH of 6.1. In the production of French-type goat cheese, before the separation of whey, the acidification is allowed to continue until a pH of generally below 5, more typically at or below 4.8, such as to a pH of 4-4.8, preferably below 4,8, such as pH 4.4-4.6, and typically a pH of 4.5. The acidification thereby generally is allowed to proceed for 8 to 24 hours, such as 12 to 20 hours, and preferably 14 to 18 hours. A typical acidification takes about 16 hours.

A problem resulting from these pH values of below 5, is the generation of acid whey (sour whey). In the field of cheese making, the production of such acid whey as having a pH below 5 is typical only for French-type goat cheese. A similar type of cheese making does not exist for cow's milk. Also, in the field of goat cheese, no other cheese making processes are known to result in acid whey, let alone at the scale at which this occurs in the field of French-type goat cheese. Particularly, the problem of acid whey waste is a limiting factor for large scale industrial production of French-type goat cheese.

As said, acid whey is generally considered to be a waste material. This equally hold for acid streams of liquid resulting from treating acid whey.

The latter is relevant for a modified process of making French-type goat cheese. This differs from the aforementioned traditional production, in that whey proteins are in fact obtained from the acid whey, by subjecting the acid whey to ultrafiltration (UF). Thereby whey proteins are obtained as a retentate, and these proteins can be recirculated to the cheese milk. Whilst this allows a better efficiency of using the goat milk components, this does not solve the problem of acid whey waste as such. The process of ultrafiltration of acid whey inevitably results in an acid whey permeate, consisting mainly of lactose and lactic acid (therefore sometimes indicated as "acid lactose."). This is still acid whey waste, for which no practical use is available.

In the context of the invention, the term "acid whey" includes acid permeate resulting from an UF treatment of acid whey.

Some background art relates to the problem of acid whey in producing concentrated dairy products such as Greek yoghurt and cream cheese. In these processes, milk is acidified and subjected to centrifugation or UltraFiltration in order to concentrate the acidified milk. The liquid fraction drained off from centrifuging or filtering is a type of acid whey. A reference in this respect is EP 3053444. Herein acid waste is still formed, but whey proteins are initially removed in a filtration step, which can be microfiltration (MF) or ultrafiltration (UF), or both. The disclosure specifically shows obtaining whey proteins by UF. The concentrating of milk by centrifuging is a fundamentally different process from cheese making, as in the production of French-type goat cheese, involving coagulation by means of rennet.

As a further background reference US 6,485,762 is mentioned. Herein microfiltration of skim milk is carried out in order to provide a retentate useful for cheese making. Thereby, during microfiltration, a pH reduction is carried out in order adjust the calcium to protein ratio. The disclosure specifically relates to mozzarella cheese. The pH reduction involved results in a pH range of 5.8 to 6.4. The disclosure does not relate to the problem of acid whey waste. Rather, it seeks to produce whey of a more constant quality of whey.

The invention seeks to provide a solution for the problem of acid whey waste in the production of French-type goat cheese.

### SUMMARY OF THE INVENTION

In order to better address one or more of the foregoing desires, the invention provides, in one aspect, a process for the preparation of French-type goat cheese by subjecting goat milk to acidification to a pH of below 5, more typically to a pH of below 4.8, so as to provide acidified goat milk; subjecting the acidified goat milk to enzymatic coagulation so as to form a cheese composition comprising curd and whey; subjecting said cheese composition to separating off of whey so as to produce cheese, the process comprising:
i) subjecting the goat milk to decreaming so as to obtain goat skim milk;
ii) subjecting the goat skim milk to microfiltration so as to obtain a whey-reduced milk fraction and a whey fraction;
iii) adding fat to the whey-reduced milk fraction so as to obtain a cheese milk fraction;
iv) subjecting the cheese milk fraction to said acidification so as to provide an acidified cheese milk fraction;
v) subjecting the acidified cheese milk fraction to said coagulation so as to form a cheese composition comprising curd and remaining whey;
vi) subjecting said cheese composition to separating off of remaining whey so as to produce French-type goat cheese.

In another aspect, the invention provides the use of microfiltration equipment in order to reduce the amount of acid whey (including acid whey permeate) obtained in the production of French-type goat cheese, wherein goat skim milk is subjected to microfiltration in said microfiltration equipment so as to obtain a retentate and a permeate, wherein the retentate is subjected to cheese making steps comprising adding fat to the retentate so as to obtain a cheese milk fraction; subjecting the cheese milk fraction to acidification, particularly to a pH of below 5, more typically to a pH of below 4.8, so as to provide an acidified cheese milk fraction, subjecting the acidified cheese milk fraction to enzymatic coagulation so as to form a cheese composition comprising curd and whey, and subjecting said cheese composition to separating off of whey so as to produce French-type goat cheese.

In yet another aspect, the invention comprises subjecting the aforementioned whey-reduced milk fraction to increasing the dry matter solids content, by adding casein powder, adding cream powder, adding cream, the removal of water or a combination thereof, said removing of water being done by evaporation, nanofiltration and / or reverse osmosis, so as to form a whey-reduced goat milk concentrate; adding fat, before or after increasing the dry matter solids content; subjecting the goat cheese milk concentrate to said acidification so as to provide an acidified goat cheese milk concentrate; subjecting the acidified goat cheese milk concentrate to said coagulation in a mould as to directly form a French-type goat cheese, without removal of remaining whey.

The French-type goat cheese obtainable by a preparation process as described above is outside the subject matter of the claims.

### BRIEF DESCRIPTION OF THE DRAWINGS

Fig. 1 is a process scheme of a traditional method of making French-type goat cheese, not according to the invention.
Fig. 2 is a process scheme of a modified method of making French-type goat cheese, not according to the invention.
Fig. 3 is a process scheme of a method of making French-type goat cheese in accordance with the invention, wherein further the traditional process is followed.
Fig. 4 is a process scheme of a method of making French-type goat cheese in accordance with the invention, wherein further the modified process is followed.

### DETAILED DESCRIPTION OF THE INVENTION

The invention is based on the judicious insight to substantially avoid the production of acid whey. This goes against common wisdom to accept the production of acid whey, or acid whey permeate, and then seek a use thereof. In other words, the invention prevents a substantial amount of whey produced in a cheese making method, conventionally resulting in acid whey, from becoming acid in the first place.

To this end, the invention provides for separating off whey at a stage before acidification occurs. Thereby milk is subjected to such microfiltration as to obtain a whey-reduced milk fraction and a whey fraction. Thereby casein is retained in the whey-reduced milk fraction, as a retentate of the microfiltration. The whey fraction, obtained as a permeate, can be substantially all the whey, with the whey-reduced milk fraction being a whey-depleted milk fraction. Typically, however, the whey fraction will be 25 wt.% to 75 wt.% of the originally present whey, such as 40 wt.% to 60 wt.%, preferably about 50 wt.%.

Before starting the microfiltration, the goat milk is subjected to decreaming so as to provide goat skim milk. Such skim milk generally has a fat content of below 0.1 wt.%, such as 0.04 wt.% to 0.08 wt.%, typically about 0.06 wt.%. The fat fraction thereby obtained is stored separately, and will be added to whey-reduced milk fraction. This addition will preferably be accomplished prior to the actual cheese making process, preferably before the start of acidification. An advantage of starting with skim milk, is that this facilitates the standardization of the cheese milk (in this case: the whey-reduced milk fraction and added fat) for desired ratios of protein and fat. This is in fact an additional benefit of the invention, obtained by virtue of subjecting decreamed milk to microfiltration as herein described. In a preferred embodiment, the aforementioned step iii), viz. adding fat to the whey-reduced milk fraction, is conducted so as to obtain a fat/protein standardized cheese milk fraction. Standardization can be at generally any desired level of fat and protein content, and is most typically of advantage in order to provide the same quality of cheese milk, independent of seasonal variations in the native milk as produced by the goat.

It will be understood that the fat added to the whey-reduced milk fraction will be fat obtained by decreaming goat milk. This can be fat sourced from another process, or from external sources. Preferably, the fat is recirculated from the initial decreaming step in the present process. In the event that a higher amount of fat is added than obtained in the decreaming step, such additional fat can still be recirculated fat from the decreaming step, in the event that part of the whey-reduced milk fraction is used to produce a low fat French-type goat cheese.

As such, the method of separating whey from casein by microfiltration is known. This is sometimes referred to as the cracking of milk. Cracking of milk as a technique is familiar to the skilled person. A suitable method for use with goat milk, is separating whey from casein by microfiltration. Thereby the whey is obtained as a permeate, and caseins are obtained as a retentate. The applicable microfiltration membranes generally have a pore size in a range of from 0.05pm to 0.25pm, preferably 0.1µm to 0.2um, preferably 0.1µm.

It will be understood that the microfiltration step of the present invention results in separating off native whey (sweet whey). The native whey as obtained in accordance with the present invention can be further processed according to conventional methods. E.g., it can be concentrated by UltraFiltration so as to obtain a whey protein concentrate (WPC). This generally has a whey protein concentration of 35 -90 wt.%, preferably 60-80 wt.%. In an interesting embodiment the WPC has a concentration of 55% to 65 wt.% of protein calculated on dry matter, such as 60 wt.%.

In carrying out the processes as herein described, equipment can be applied with which the person skilled in the art is well familiar. Microfiltration equipment can, e.g., be based on ceramic membranes (Pall, Tami, Atech), or. e.g., polymeric membranes, typically spiral wound polymeric membranes, with membrane housing and pumps conventional in the art. The microfiltration processes can be carried out at a range of temperatures, preferably at most 60°C, such as from 10°C to 60°C, e.g. 50°C to 55°C. Optionally, in addition to microfiltration, a step of diafiltration can be carried out so as to further wash out the obtained concentrate and decrease the whey protein content of the casein fraction.

Various steps in the cheese making method of the invention are discussed hereinbelow.

The goat milk to be used is generally pasteurized milk.

The method applied in the present invention is specific for the preparation of French-type goat cheese. This type of goat cheese is generally characterized by a white or whitish colour, and a soft structure. In the art, this type of cheese is typically known by the French generic term "Chèvre." These cheeses are generally produced in different sizes (typically cylinder shaped) and at different stages of ripening.

It is of the essence in producing French-type goat cheese that the goat milk is subjected to both acidification and coagulation. The term coagulation indicates a solidification process in which proteins are made to stick together as a discontinuous phase, thereby becoming separated from its original liquid continuous phase. Coagulation is different from solidification by thickening. This difference is particularly manifest in the event of enzymatic coagulation.

The acidification can be conducted by adding bacteriae that produce acid, particularly lactic acid producing bacteriae. It is preferred to add a bacterial starter culture, such as *Lactococcus lactis* subspecies *cremoris* or *Lactococcus lactis* subspecies *lactis.*

In the method of the invention, however, the acidification is not conducted on the goat milk as such. Rather, in a first step the goat milk is subjected to microfiltration. This results in a separation of whey (which is obtained as a filtrate) and casein which is obtained as a retentate. The goat milk is thus separated into a whey-reduced milk fraction and a whey fraction. As mentioned, the goat milk is typically decreamed before microfiltration, and fat is added back before cheese making.

The whey fraction can be discarded and put to suitable use, e.g. by retrieving whey protein therefrom. Typically, this can result in products such as whey protein concentrate or whey protein isolate. These products are generally desirable to obtain. Uniquely, by virtue of the method of the present invention, these products can now be obtained as useful by-products from making French-type goat cheese. Hitherto, the whey (or the whey permeate) produced thereby consisted of largely useless waste, due to the acidic character thereof.

The judicious avoidance of acid whey waste provided by the present method, is of additional benefit to large scale production of French-type goat cheese. Traditionally, this cheese is produced at farms processing up to, e.g., 30,000 L goat milk per day. The present method removes a key factor limiting the upscaling of the production of French-type goat cheese. Accordingly, the present method enables the processing of large amounts such as more than 50,000 L goat milk per day, such as more than 100,000 L/day.

The cheese making process of the invention is conducted on the whey-reduced milk fraction. This fraction is subjected to acidification and coagulation, typically by rennet. The term "rennet" includes, but is not limited to, coagulating enzyme extracts from calf stomach. Renneting enzymes can also be obtained from other mammalian stomachs, rennet can comprise microbially produced enzymes, or other milk clotting enzymes. The person skilled in the art of making cheese is familiar with the available types of rennet. Casein macropeptide (CMP) is cleaved from the casein protein as a result of the action of the rennet on κ-casein and about 90% of this CMP is typically removed with the whey. The hydrolysis of κ-casein leads to destabilization of the colloidal system of the milk. This is followed by aggregation of the casein micelles into clusters. Over time, the clusters grow in size. This growth in size is followed by crosslinking between chains which eventually transforms the milk into a gel or coagulum.

If desired, whey can be added, in order to adjust the protein composition in terms of caseins and whey proteins. The whey thereby preferably is acid whey. This can be resourced from elsewhere. Thus, the method of the invention also provides for a suitable use of acid whey that otherwise would have been wasted.

The whey-reduced milk fraction will generally have a weight ratio of caseins to whey proteins of from 85/15 to 95/5 wt.% of casein, such as about 90/10. The whey-reduced fractions having a casein to whey ratio of above 90/10 (i.e. below 10 wt.% of whey protein based in protein content), are preferably obtained by means of an additional diafiltration step during the microfiltration. Before starting the acidification and coagulation, whey preferably is added back, more preferably resourced from acid whey streams, to obtain a ratio of about the original ratio of 80/20. A further advantage of the method of the invention is that this ratio can be adjusted as desired, including a relative increase of whey proteins, such as in a ratio of caseins to why proteins of 70/30 to 80/20, preferably about 75/25. In an interesting embodiment, the whey proteins that are added back, are obtained by subjecting acid whey to ultrafiltration(UF) in order to obtain an acid whey protein concentrate. This can be done by methods that are conventionally known for producing whey concentrates, at desired factors of concentration. By further preference, the UF-based acid whey is subjected to a heating, such as to a temperature of 80°C to 90°C, in order to denature the acid whey proteins, and facilitating their being incorporated into the resulting cheese matrix. This advantageously results in a higher yield of proteins obtained from goat milk than obtained when producing French-type goat cheese according to the traditional method:
- the whey protein separated off by the process of the invention is not acidic, and can thus be put to use in a variety of other applications;
- whey proteins separated off as acid whey from a conventional parallel process of making French-type goat cheese can advantageously be added when making French-type goat cheese using the method of the invention.

In an interesting alternative embodiment, the cheese making process of the invention is not conducted on the whey-reduced milk fraction as such, but after same has been subjected to increasing the dry matter solids content.

The dry matter solids content of the goat milk after microfiltration (such as the whey-reduced milk fraction), generally has a dry matter solids content of above 13wt.%, such as of from 15 wt.% to 30 wt.%, such as 17 wt.% to 26 wt.%. This dry matter solids content can be increased by the addition of casein powder, cream powder, cream, the removal of water, or a combination thereof. Water-removal can be done by standard techniques such as evaporation, nanofiltration, reversed osmosis, or combinations thereof such as nanofiltration followed by evaporation.

As a result, the process of the invention allows the direct making of cheese upon coagulation, without the need to further separate off whey. Accordingly, a process is provided for the preparation of French-type goat cheese by subjecting goat milk to acidification to a pH of below 5 so as to provide acidified goat milk; subjecting the acidified goat milk to enzymatic coagulation, the process comprising: i) subjecting the goat milk to decreaming so as to obtain goat skim milk; ii) subjecting the goat skim milk to microfiltration so as to obtain a whey-reduced milk fraction and a whey fraction; iii) increasing the solids content of the whey-reduced milk fraction, such as to a dry matter solids content of from 25 wt.% to 55 wt.% so as to form a whey-reduced goat milk concentrate; iii) adding fat to the whey-reduced goat milk concentrate so as to obtain a goat cheese milk concentrate; iv) subjecting the goat cheese milk concentrate to said acidification so as to provide an acidified goat cheese milk concentrate; v) subjecting the acidified goat cheese milk concentrate to said coagulation so as to directly form a French-type goat cheese. The aforementioned solids content preferably is in a range of from 30 wt.% to 50 wt.%, more preferably of from 35 wt.% to 45 wt.%, such as 40 wt.%.

An advantage of this process, is that the actual cheese-making can take place directly in any desired mould. Accordingly, the use of filter bags can be avoided. It has not hitherto been possible to make French-type goat cheese without conducting the effort of draining and/or pressing whey off by using filter bags.

To this end the whey-reduced goat milk concentrate is pumped in to said mould. Starter cultures and coagulant are added to the whey-reduced goat milk concentrate in the mould, or shortly before transferring it to the mould. Avoiding such an additional step is generally advantageous. Particularly, for industrial scale production it is advantageous that the use of filter bags can be avoided. As a result, acidification and coagulation occur in said mould. Since no remaining whey needs to be drained off, the cheese is formed directly, thereby following the shape of the mould. Any shape or size of mould can hereby be used. E.g., round cups can be used of a size commensurate with the size of the French type goat cheese as it will be available to end-users, e.g. having a diameter of from 5 cm to 15 cm and a height of, e.g., 1 cm to 5 cm. The mould can also be cylinder-shaped, so as to directly produce a French-type goat cheese in the shape of a round cylinder, i.e., a roll, from which slices can be cut. It is also well possible to use any size or shape of a vat, bucket, or other container, allowing to make a French-type goat cheese exceeding the typical end-consumer size, but suitable either as an industrial intermediate as a gross-sale product for restaurants and the like. An industrial intermediate French-type goat cheese can be subjected, e.g., to extrusion of a cylinder shaped French-type goat cheese, from which suitable smaller cheeses can be cut and packaged for consumers. If provided as a gross-sale product for restaurants, this will allow chefs to cut their own desired sizes and shapes of French-type goat cheese.

The embodiment of directly making cheese from a whey-reduced goat milk concentrate, has a further advantage that a relatively small amount of coagulating enzyme, such as rennet, is required. This amount is generally in a range of from 0.1 ml to 5 ml of coagulating enzyme, such a 0.5 ml to 1 ml, per litre cheese milk (whey-reduced goat milk concentrate). The skilled person will be able to determine suitable amounts of rennet also depending on the strength of the rennet used. This strength can be expressed in IMCU/ml (International Milk Clotting Units).

Preferably, the goat milk is first subjected to decreaming. This is typically conducted in a decreaming centrifuge (also known as a cream separator). Such centrifuges (cream separators) can be open centrifuges, such as provided by GEA-Westfalia, e.g., type MSI-600. Centrifuges can also be hermetically closed, such as provided by TetraPak, e.g., type H75.

In a preferred embodiment, the goat milk, after decreaming, is subjected to a first microfiltration step so as to remove bacteria and spores. This results in a purified goat skim milk filtrate and a bacteria- and spores-containing retentate. The advance of adding this extra MicroFiltration step to obtain a purified goat cheese milk, is an extension of the shelf life of the cheese.. Microfiltration equipment can, e.g., be based on ceramic membranes (Pall, Tami, Atech), with membrane housing and pumps conventional in the art. The separation and microfiltration processes can be carried out at a range of temperatures, preferably at most 60°C, such as from 10°C to 60°C, e.g. 50°C to 55°C.

This first microfiltration is preferably conducted over a membrane having a pore size in a range of 0.8 um to 1.4 µm, preferably 1.2 um to 1.4 um. The resulting purified goat skim milk, will then be subjected to the aforementioned microfiltration step or steps, thereby removing a whey fraction and obtaining a whey-reduced milk fraction.

The French-type goat cheese made according to the present invention can be subjected to shaping in any conventional manner. Typically, French-type goat cheese is provided as a cured extrudate and is then cut and/or filled into moulds.

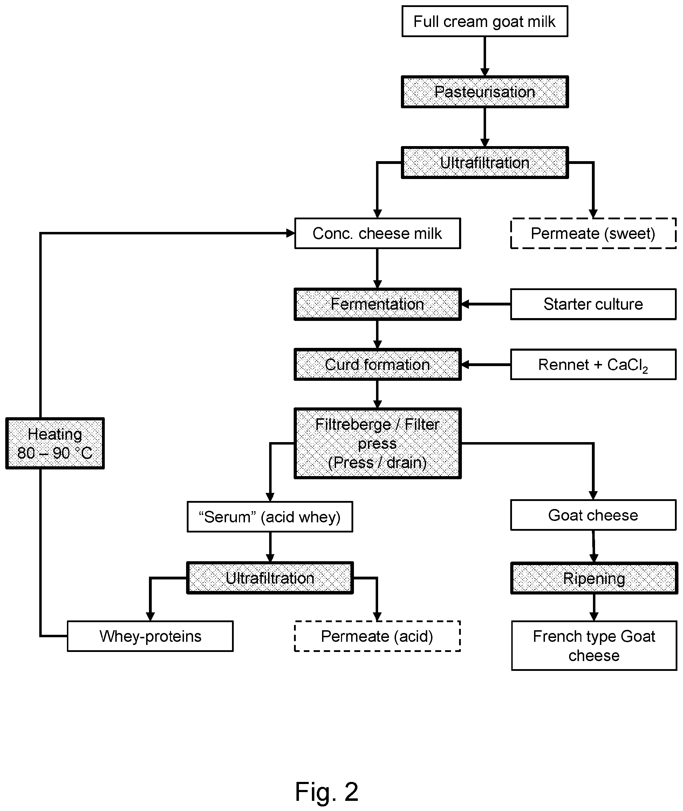

In another aspect, the invention provides the use of microfiltration equipment in order to reduce the amount of acid whey obtained in the production of French-type goat cheese. Hitherto, the microfiltration of goat milk has not been applied for this purpose. In fact, as shown in Fig, 1 and Fig,2, the production of French-type goat cheese conventionally does not involve subjecting the milk to microfiltration prior to cheese making. This has the additional advantage that the UF step of the goat milk as conducted in pre-existing processes of the modified type, can be dispensed with. It will be understood that the microfiltration step of the invention is fundamentally different from the UF step to which the goat milk is subjected in the process of Fig.2. Whilst the latter does result in obtaining (sweet) whey proteins that can be put to use, the UF step is not conducted for the purpose of reducing the problem of acid whey production.

In a still further aspect, the invention presents French-type goat cheese obtainable by a preparation process as described above. As noted, the produced cheese essentially is French-type goat cheese. However, the combination of several steps results in a product that has differences from the known product. These are:
- the separation of cream and the subsequent standardization of the cheese milk;
- the removal of native whey from the cheese milk before cheese making;
- (if applicable) the addition of whey proteins sourced elsewhere;
- (if applicable) the addition of denatured, particularly heated, whey proteins to the cheese milk.

In fact, the process of the invention provides for a great versatility in the French-type goat cheeses that can be produced therewith. The composition of the cheese milk is not limited by the natural content and variations in fat and proteins. Fat is generally added in an amount ranging from 50% to 150% by weight of the amount of fat removed by decreaming, such as of from 70% by weight to 130% by weight. The addition of a relatively low amount of fat allows to produce a low-fat French-type goat cheese. The addition of a relatively high amount of fat allows to produce a relatively smooth cheese. The amounts of fat added are relative to the amount originally removed by decreaming. Thus, when making a low fat French-type goat cheese, one can add back an amount lower than 100% by weight of the amount removed by decreaming, such as lower than 80% by weight, such as lower than 70% by weight. Generally, the amount of fat added will be at least 50% by weight of the amount removed by decreaming, such as at least 60% by weight. When making a high-fat, smoother, French-type goat cheese, one can add back an amount higher than 100% by weight of the amount removed by decreaming, such as higher than 110% by weight, such as higher than 120% by weight. Generally, the amount of fat added will be at most 150% by weight of the amount removed by decreaming, such as at most 140% by weight.

As mentioned, it is also possible to add whey proteins to the whey-reduced milk fraction prior to acidification. If added, whey proteins will be generally added in an amount ranging up to 150 % by weight of the whey fraction originally removed by microfiltration, such as in a range of from 10% by weight to 100%, such as 25% by weight to 75% by weight, The addition of whey proteins contributed, with or without added fat, to obtaining a French-type goat cheese having greater smoothness.

In the embodiment in which the French-type goat cheese is made directly from a goat cheese milk concentrate, the addition of whey will preferably be in the form of a powder, so as to avoid the addition of water to the concentrate.

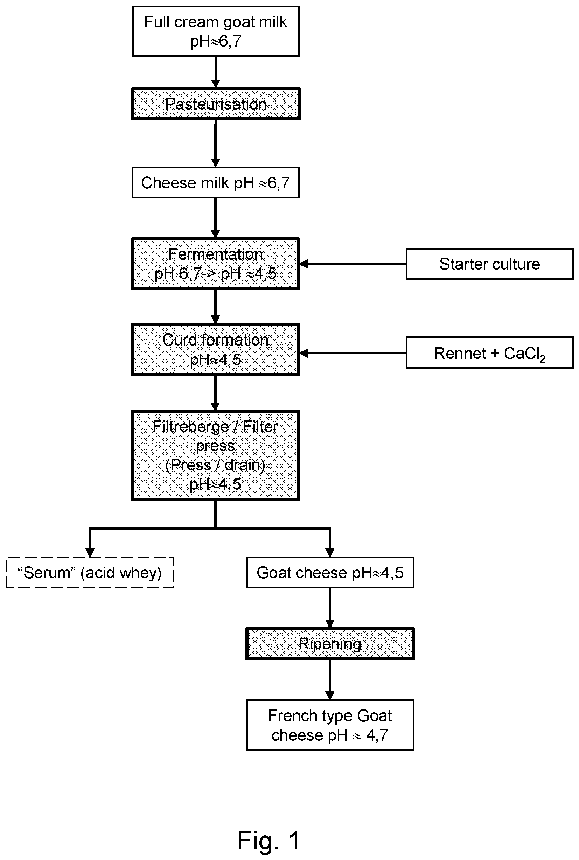

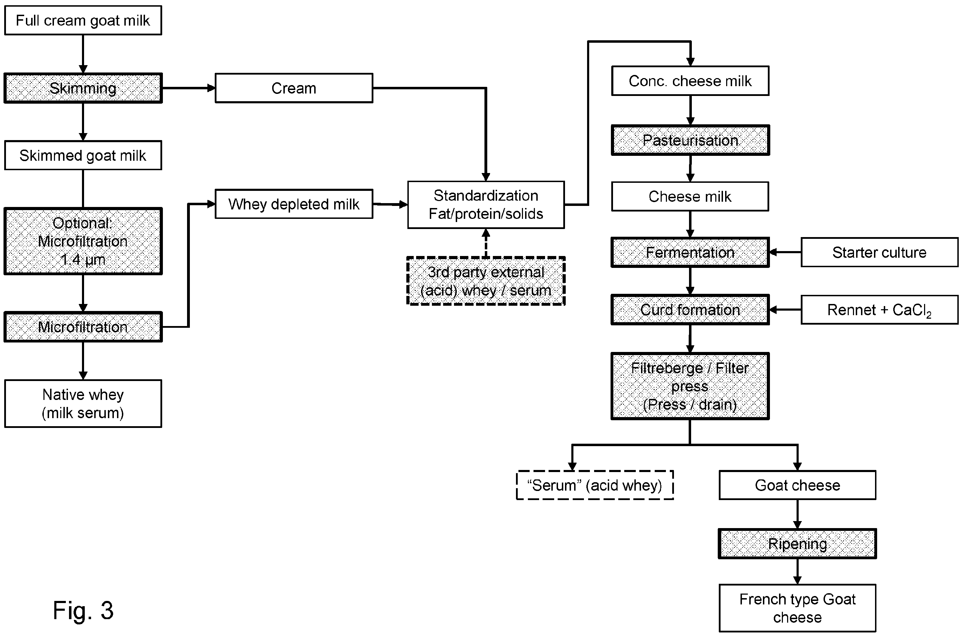

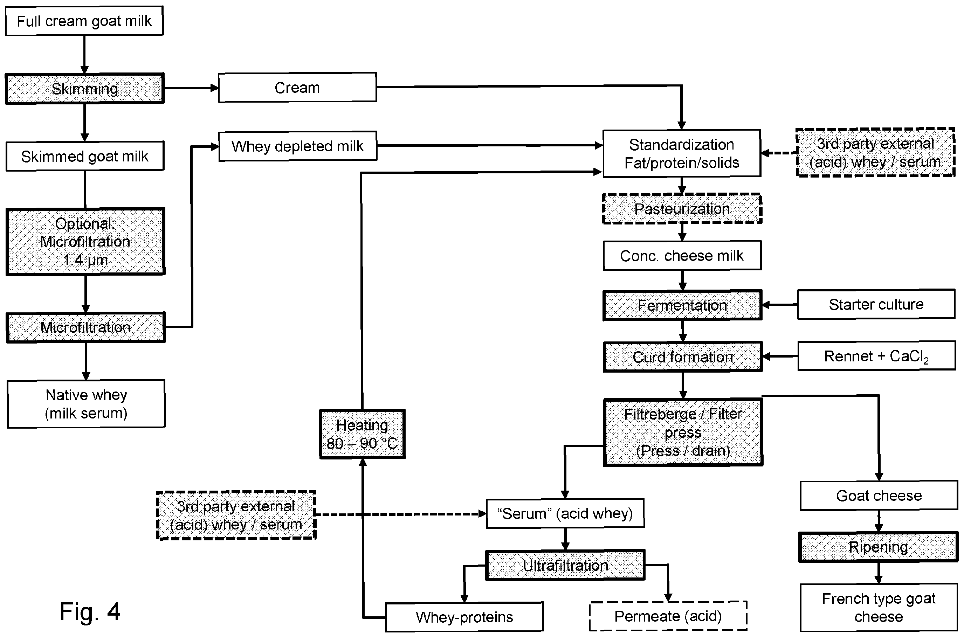

The process of the invention is hereinafter further illustrated in the non-limiting process schemes of Fig. 3 and Fig. 4, and with reference to the general process schemes of Fig. 1 and Fig. 2. Further, examples illustrate the embodiment in which French-type goat cheese is made directly from a goat milk concentrate. These schemes and examples are not limiting, and are intended to present generally applicable embodiments and options for the present process.

With reference to Fig. 1, the production of French-type goat cheese traditionally is done with full cream goat milk. The goat milk is subjected to pasteurization. Generally, pasteurization conditions are: 15 seconds to 3 minutes, at a temperature of from 72°C to 85°C, such as 30 seconds at 75°C. This results in a pasteurized cheese milk, which generally has a neutral pH in a range of pH 6.5 to 7, generally of pH 6.7.

To the cheese milk a starter culture is added, typically of the *Lactococcus lactis* ssp. *lactis* or *L. lactis* ssp. *cremoris* strains. This leads to a fermentation of the cheese milk, whereby lactic acid is formed, thus resulting in acidification. Typically, in the process of making French-type goat cheese, the acidification is allowed to occur up to a considerable pH reduction, generally to below pH 5, such as to a pH below 4.8, such as a pH of 4-4.8, and typically to a pH of 4.5.

After the desired pH has been reached, a coagulating enzyme is added, typically rennet. This results in curd formation, at the aforementioned pH. Generally, also calcium chloride is added with the enzyme.

The formed curd is present in a composition with the liquid from which the curd is coagulated (the curd generally being predominantly casein and fat, the whey generally containing predominantly water, lactose and whey proteins). This composition comprising curd and whey is then subjected to draining off of whey, typically in a filter bag *(filtreberge).* The draining is generally forced by gravity, by pressing, or both. The pH thereby remaining at the aforementioned low value, the drained off whey (serum) is acid whey of said low pH. The goat cheese thereby formed necessarily has the same low pH. This can increase to some extent during ripening, but generally French-type goat cheese has a pH below 5, more typically below 4.8, such as a pH of 4.7.

Fig. 2 depicts a modified process scheme for producing French-type goat cheese. Herein an initially difference with the aforementioned traditional process is to subject the pasteurized goat milk to ultrafiltration. This results in a permeate comprising water, lactose, minerals, and a retentate (concentrated cheese milk). This ("sweet lactose") permeate can generally be put to use (not further addressed in the scheme). The concentrated cheese milk is subjected to essentially the same process steps of fermentation (acidification) and enzymatic coagulation (curd formation) as in the aforementioned traditional process, involving the same pH ranges and typical values as described with reference to Fig. 1. Generally, also the acid whey produced is subjected to ultrafiltration in order to obtain whey proteins therefrom as a retentate. Thereby the process of Fig. 2 essentially results in an acid permeate, generally having a pH of the same value as indicated for the acid whey of Fig. 1 but mainly consisting of lactose, lactic acid, minerals, and non-protein nitrogen, and being low in whey proteins. The resulting goat cheese is essentially French-type goat cheese similar to the traditional process, but more softly and smooth because of the higher whey protein incorporated in the cheese. The whey proteins obtained by ultrafiltration of the acid whey, can be recirculated to the concentrated cheese milk, thereby adjusting the protein composition (casein and whey protein) as desired. It will be understood that the modified process allows a better efficiency of putting to use whey proteins than in the traditional process, but the problem of acid waste remains.

Fig. 3 is a process scheme illustrating the invention disclosed herein, starting from full cream goat milk, and further following the course of the aforementioned traditional process.

The goat milk is subjected to skimming, so as to separate cream from skimmed goat milk. The skimmed goat milk is optionally subjected to microfiltration at e.g. 1.4 um, in order to reduce bacteriae and spores count. Pasteurization is not strictly necessary, but is optionally done, e.g., with a view to avoiding post-contamination, such as during transportation.

The goat milk is then subjected to such microfiltration as to separate whey from casein. This results in a retentate (whey-depleted or whey-reduced milk, i.e., wherein the proteins have an increased ratio of casein to whey protein, such as 90: 10 to 95:5, and a permeate (native whey, also known as milk serum).

The whey-reduced milk is then subjected to a process for making French-type goat cheese. This preferably involves adding back cream. An additional advantage over the traditional process is that this facilitates standardization of the cheese milk, rather than dependency on natural variations as will be generally found in the native goat milk.

Optionally at this stage whey can be added so as to adjust the composition of the cheese milk based on said whey-reduced milk. An advantage hereby is that the whey added can be just acid whey or whey (protein) concentrate, since the process, as discussed, will essentially involve an acid pH anyway. Thus, the process of the invention on the one hand reduced the problem of producing acid whey waste (by separating off native whey before acidification occurs), and at the same time contributes in another way to solving the problem of acid whey waste, by providing an opportunity to put existing acid whey (sourced e.g. form elsewhere) to good use.

The resulting concentrated cheese milk, optionally with added (acid) whey, is then subjected to cheese making steps (optionally after pasteurization). These cheese making steps are essentially the same process steps of fermentation (acidification) and enzymatic coagulation (curd formation) as in the aforementioned traditional and modified processes, involving the same pH ranges and typical values as described with reference to Fig. 1.

Fig. 4 is a process scheme illustrating the invention disclosed herein, starting from full cream goat milk, and further following the course of the aforementioned modified process.

The goat milk is subjected to skimming, so as to separate cream from skimmed goat milk. The skimmed goat milk is optionally subjected to microfiltration at e.g. 1.4 um, in order to reduce bacteriae and spores count. Pasteurization is not strictly necessary, but is optionally done, e.g., with a view to avoiding post-contamination, such as during transportation.

The goat milk is then subjected to such microfiltration as to separate whey from casein. This results in a retentate (whey-depleted or whey-reduced milk, i.e., wherein the proteins have an increased ratio of casein to whey protein, such as 90: 10 to 95:5, and a permeate (native whey, also known as milk serum). In marked deviation from the reference process of Fig.2, the UltraFiltration step used therein is dispensed with.

The whey-reduced milk is then subjected to a process for making French-type goat cheese. This preferably involves adding back cream. An additional advantage over the traditional process is that this facilitates standardization of the cheese milk, rather than dependency on natural variations as will be generally found in the native goat milk.

Optionally at this stage whey can be added so as to adjust the composition of the cheese milk based on said whey-reduced milk, as discussed in respect of the process of Fig 3.

The resulting concentrated cheese milk, optionally with added (acid) whey, is subjected to essentially the same process steps of fermentation (acidification) and enzymatic coagulation (curd formation) as in the aforementioned traditional and modified processes, involving the same pH ranges and typical values as described with reference to Fig. 1.

Optionally, as in Fig. 2, the acid whey produced is subjected to ultrafiltration in order to obtain why proteins therefrom as a retentate. Thereby also the process of Fig. 4 does result in an acid permeate, but this is much less than in the modified process of Fig. 2, typically 40 vol.% to 60 vol.% less, such as 50 vol.% less. The resulting goat cheese is essentially French-type goat cheese just as resulting from the pre-existing modified process. Advantageously, the cheese can be made from standardized cheese milk and thus have a more consistent composition throughout the year, despite seasonal variations in the fat content of the milk as produced.

Also, in the process of the invention, the whey proteins obtained by ultrafiltration of the acid whey, can be recirculated to the concentrated cheese milk, thereby adjusting the protein composition (casein and whey protein) as desired.

It is noted that, as general embodiments for the process of the invention, it is entirely optional to add acid whey or not, and to do so from an external source, from recirculation after the process of making French-type goat cheese, or both. In a preferred embodiment acid whey is added to the cheese milk by recirculation, particularly since these proteins are thereby heated (as shown), which results in denaturation. The denatured whey proteins show a better capturing in the cheese network of proteins. It is also possible to recirculate the acid whey without first subjecting this to ultrafiltration. Combinations are also possible (part recirculated without ultrafiltration, part recirculated as concentrated whey proteins after ultrafiltration), e.g. in ratio of 30:70 to 70:30, such as 40:60 to 60:40, e.g. 50:50.

### Example 1

Goat milk is subjected to microfiltration so as to remove water and water-soluble substances such as whey proteins, salts, and lactose. The resulting whey-reduced goat milk has the following characteristics and composition:
- pH 6,2
- protein content 8.7 wt.%
- casein content 7.6 wt.%
- Fat content: 12.2 wt.%
- Lactose content: 3.6 wt.%
- Dry matter solids content: 25.8 wt.%

The whey-reduced goat milk is subjected to increasing the dry matter solids content. This is accomplished by removing water via reverse osmosis, until a whey-reduced goat milk concentrate is formed having the following characteristics and composition:
- pH 6,2
- protein content 13.5 wt.%
- casein content 11.8 wt.%
- Fat content: 18.9 wt.%
- Lactose content: 5.6 wt.%
- Dry matter solids content: 40 wt.%

Said whey-reduced goat milk concentrate, to be used as cheese milk, is pasteurized for 1 minute at 75°C, and cooled down to 45°C. Thereupon a thermophilic lactic acid bacteriae ( (CSK:S8 11-7 en K892.7) is added. The cheese milk is allowed to be acidified until a pH of 4.6. After this acidification, a small amount of coagulant is added ((0,5 ml per 100 litre milk of Milase^{®} XQL 220 BF having a milk clotting strength of 220 IMC/ml).

Directly after the addition of the coagulant, the cheese milk is transferred to a mould, and cooled down to 6°C. During said cooling, the cheese milk coagulates, thereby forming the final cheese product without separation of remaining whey.

### Example 2

Goat milk is subjected to microfiltration, as in Example 1, so as to obtain whey-reduced goat milk. From a part of the resulting whey-reduced goat milk, water is removed by evaporation and drying, so as to obtain a powder having a dry matter solids content of 96 wt.%. An amount of said powder is mixed with an amount of the whey-reduced goat milk. The mixing ratio is 3.88 parts by weight of the whey-reduced goat milk, to 1 part by weight of the powder. This results in a cheese-making liquid having an increased dry matter solids content, the composition and characteristics of which are the same as the whey-reduced goat milk concentrate of example 1. The cheese-making liquid is subjected to pasteurization and cheese-making as in Example 1.

## Claims

1. A process for the preparation of French-type goat cheese by subjecting goat milk to acidification to a pH of below 5 so as to provide acidified goat milk; subjecting the acidified goat milk to enzymatic coagulation so as to form a cheese composition comprising curd and whey; subjecting said cheese composition to separating off of whey so as to produce cheese, the process comprising:
i) subjecting the goat milk to decreaming so as to obtain goat skim milk;
ii) subjecting the goat skim milk to microfiltration so as to obtain a whey-reduced milk fraction and a whey fraction;
iii) adding fat to the whey-reduced milk fraction so as to obtain a cheese milk fraction;
iv) subjecting the cheese milk fraction to said acidification so as to provide an acidified cheese milk fraction;
v) subjecting the acidified cheese milk fraction to said coagulation so as to form a cheese composition comprising curd and remaining whey;
vi) subjecting said cheese composition to separating off of remaining whey so as to produce French-type goat cheese.

2. A process according to claim 1, wherein the acidification is to a pH of below 4.8, preferably in a range of from pH 4 to pH 4.8.

3. A process according to claim 1 or 2, wherein the enzymatic coagulation comprises adding rennet to the acidified goat milk.

4. A process according to any one of the preceding claims, wherein the acidification comprises adding a lactic-acid producing cheese bacteria culture, such as *Lactococcus lactis* ssp. *lactis* or *L. lactis* ssp. *cremoris* strains, to the whey-reduced milk fraction.

5. A process according to any one of the preceding claims, wherein the microfiltration is conducted over a microfiltration membrane having a pore size in a range of from 0.05pm to 0.25µm, preferably of from 0.1µm to 0.2pm.

6. A process according to any one of the preceding claims, wherein the amount of fat added to the whey-reduced milk fraction is in a range of from 50% to 150% by weight of the amount of fat removed by decreaming, such as of from 70% by weight to 130% by weight..

7. A process according to claim 6, wherein the amount of fat added to the whey-reduced milk fraction is in a range of from 50% to 80% of the amount of fat removed by decreaming, thus resulting in a low fat French-type goat cheese.

8. A process according to claim 6, wherein the amount of fat added to the whey-reduced milk fraction is in a range of from 120% to 150% of the amount of fat removed by decreaming, thus resulting in a high fat French-type goat cheese.

9. A process according to any one of the preceding claims, comprising adding whey proteins to the whey-reduced milk fraction prior to acidification, preferably in a range of up to 150% by weight of the whey fraction removed by microfiltration.

10. A process according to claim 9, wherein the whey proteins are selected from the group consisting of acid whey, acid whey retentate obtained by subjecting acid whey to ultrafiltration, acid whey retentate obtained by subjecting acid whey to nanofiltration, acid whey retentate obtained by subjecting acid whey to reversed osmosis, and combinations thereof, wherein the acid whey is preferably the remaining whey obtained in step (vi).

11. A process according to claim 9 or 10, comprising denaturing the whey proteins, preferably by heating the proteins to a temperature of from 80°C to 90°C, prior to their addition to the whey-reduced milk fraction.

12. A process according to any one of the preceding claims, comprising subjecting the goat milk, preferably goat skim milk, to a first microfiltration so as to remove bacteria and spores, thereby obtaining a purified goat milk filtrate and a bacteria- and spores-containing retentate, and then subjecting the purified goat milk to such microfiltration as to obtain a whey-reduced milk fraction and a whey fraction.

13. A process according to any one of the preceding claims, wherein the separating off of remaining whey is conducted by putting the cheese composition comprising curd and remaining whey into filter bags, the separation comprising draining off of whey from said filter bags by gravity.

14. A process for the preparation of French-type goat cheese by subjecting goat milk to acidification to a pH of below 5 so as to provide acidified goat milk; subjecting the acidified goat milk to enzymatic coagulation, the process comprising:
i) subjecting the goat milk to decreaming so as to obtain goat skim milk;
ii) subjecting the goat skim milk to microfiltration so as to obtain a whey-reduced milk fraction and a whey fraction;
iii) subjecting the whey-reduced milk fraction to increasing the dry matter solids content, such as to at least 30 wt.% so as to form a whey-reduced goat milk concentrate, whereby increasing the dry_matter solids content comprises a step selected from the group consisting of adding casein powder, adding cream powder, adding cream, removing water, and a combination thereof, said removing water being done by a method selected from the group consisting of evaporation, nanofiltration, reversed osmosis, and combinations thereof;
iii) adding fat, before or after increasing the dry matter solids content, so as to obtain a goat cheese milk concentrate;
iv) subjecting the goat cheese milk concentrate to said acidification so as to provide an acidified goat cheese milk concentrate;
v) subjecting the acidified goat cheese milk concentrate to said coagulation in a mould so as to directly form a French-type goat cheese.

15. A process according to claim 14, wherein increasing the dry matter solids content is accomplished by water-removal, such as by nanofiltration and/or by evaporation.

16. A process according to claim 14 or 15, wherein increasing the dry mater solids content comprises adding goat casein powder.

17. A process according to any one of the claims 14 to 16, wherein the water removal is to a dry-matter solids content of 35 wt.% to 45 wt.%.

18. A process according to any one of the preceding claims, applied to an amount of at least 50,000L of goat milk per day, such as more than 100,000 L/day.

19. The use of microfiltration equipment in order to reduce the amount of acid whey obtained in the production of French-type goat cheese, wherein goat skim milk is subjected to microfiltration in said microfiltration equipment so as to obtain a retentate and a permeate, wherein the retentate is subjected to a cheese making process comprising adding fat to the retentate so as to obtain a cheese milk fraction; subjecting the cheese milk fraction to acidification, so as to provide an acidified cheese milk fraction, subjecting the acidified cheese milk fraction to enzymatic coagulation so as to form a cheese composition comprising curd and whey, and subjecting said cheese composition to separating off of whey so as to produce French-type goat cheese.

20. A use according to claim 19, wherein the cheese making process is as defined in any one of the claims 1 to 13.

21. A use according to claim 19 or 20, wherein the cheese making process is conducted on an amount of at least 50,000L of goat milk per day, such as more than 100,000 L/day.

## Patentansprüche

1. Verfahren zum Herstellen von Ziegenkäse nach französischer Art durch Unterziehen von Ziegenmilch einer Ansäuerung auf einen pH von unter 5, um angesäuerte Ziegenmilch bereitzustellen; Unterziehen der angesäuerten Ziegenmilch einer enzymatischen Gerinnung, um eine Käsezusammensetzung zu bilden, umfassend Käsebruch und Molke; Unterziehen der Käsezusammensetzung einem Abtrennen von Molke, um Käse herzustellen, das Verfahren umfassend:
i) Unterziehen der Ziegenmilch einem Entrahmen, um Ziegenmagermilch zu erhalten;
ii) Unterziehen der Ziegenmagermilch einer Mikrofiltration, um eine molkereduzierte Milchfraktion und eine Molkefraktion zu erhalten;
iii) Zugeben von Fett zu der molkereduzierten Milchfraktion, um eine Käsemilchfraktion zu erhalten;
iv) Unterziehen der Käsemilchfraktion der Ansäuerung, um eine angesäuerte Käsemilchfraktion bereitzustellen;
v) Unterziehen der angesäuerten Käsemilchfraktion der Gerinnung, um eine Käsezusammensetzung zu bilden, umfassend Käsebruch und Restmolke;
vi) Unterziehen der Käsezusammensetzung einem Abtrennen von Restmolke, um Ziegenkäse nach französischer Art herzustellen.

2. Verfahren nach Anspruch 1, wobei die Ansäuerung auf einen pH von unter 4,8, vorzugsweise in einem Bereich von von pH 4 bis pH 4,8, ist.

3. Verfahren nach Anspruch 1 oder 2, wobei die enzymatische Gerinnung Zugeben von Lab zu der angesäuerten Ziegenmilch umfasst.

4. Verfahren nach einem der vorhergehenden Ansprüche, wobei die Ansäuerung Zugeben einer Milchsäure produzierenden Käsebakterienkultur, wie *Lactococcus lactis* ssp. *lactis* oder *L. lactis* ssp. *cremoris-Stämme,* zu der molkenreduzierten Milchfraktion umfasst.

5. Verfahren nach einem der vorhergehenden Ansprüche, wobei die Mikrofiltration über eine Mikrofiltrationsmembran mit einer Porengröße in einem Bereich von von 0,05 µm bis 0,25 µm, vorzugsweise von von 0,1 µm bis 0,2 µm, durchgeführt wird.

6. Verfahren nach einem der vorhergehenden Ansprüche, wobei die Fettmenge, zugegeben zu der molkenreduzierten Milchfraktion, in einem Bereich von von 50 Gew.-% bis 150 Gew.-% der Fettmenge , entnommen durch Entrahmen, ist wie von von 70 Gew.-% bis 130 Gew.-%.

7. Verfahren nach Anspruch 6, wobei die Fettmenge, zugegeben der molkereduzierten Milchfraktion, in einem Bereich von von 50 % bis 80 % der Fettmenge, entnommen durch Entrahmen, ist, dadurch resultierend in einem fettarmen Ziegenkäse nach französischer Art.

8. Verfahren nach Anspruch 6, wobei die Fettmenge, zugegeben der molkenreduzierten Milchfraktion, in einem Bereich von von 120 % bis 150 % der Fettmenge, entnommen durch Entrahmen, ist, dadurch resultierend in einem fettreichen Ziegenkäse nach französischer Art.

9. Verfahren nach einem der vorhergehenden Ansprüche, umfassend Zugeben von Molkeproteinen zu der molkereduzierten Milchfraktion vor Ansäuerung, vorzugsweise in einem Bereich von bis zu 150 Gew.-% der Molkefraktion, entnommen durch Mikrofiltration.

10. Verfahren nach Anspruch 9, wobei die Molkenproteine ausgewählt sind aus der Gruppe bestehend aus saurer Molke, saurem Molkenretentat, erhalten durch Unterziehen von saurer Molke einer Ultrafiltration, saurem Molkenretentat, erhalten durch Unterziehen von saurer Molke einer Nanofiltration, saurem Molkenretentat, erhalten durch Unterziehen von saurer Molke einer Umkehrosmose, und Kombinationen davon, wobei die saure Molke vorzugsweise die Restmolke ist, erhalten in Schritt (vi).

11. Verfahren nach Anspruch 9 oder 10, umfassend Denaturieren der Molkenproteine, vorzugsweise durch Erhitzen der Proteine auf eine Temperatur von von 80 °C bis 90 °C, vor ihrer Zugabe zur molkereduzierten Milchfraktion.

12. Verfahren nach einem der vorhergehenden Ansprüche, umfassend Unterziehen der Ziegenmilch, vorzugsweise Ziegenmagermilch, einer ersten Mikrofiltration, um Bakterien und Sporen zu entfernen, dadurch Erhalten eines gereinigten Ziegenmilchfiltrats und eines Bakterien und Sporen enthaltenden Retentats, und dann Unterziehen der gereinigten Ziegenmilch einer solchen Mikrofiltration, um eine molkenreduzierte Milchfraktion und eine Molkefraktion zu erhalten.

13. Verfahren nach einem der vorhergehenden Ansprüche, wobei das Abtrennen der Restmolke durch Geben der Käsezusammensetzung, umfassend Käsebruch und Restmolke, in Filtersäcke, durchgeführt wird, die Abtrennung umfassend Ablaufen der Molke aus den Filtersäcken durch Schwerkraft.

14. Verfahren zum Herstellen von Ziegenkäse nach französischer Art durch Unterziehen von Ziegenmilch einer Ansäuerung auf einen pH von unter 5, um saure Ziegenmilch bereitzustellen; Unterziehen der angesäuerten Ziegenmilch einer enzymatischen Gerinnung, das Verfahren umfassend:
i) Unterziehen der Ziegenmilch einem Entrahmen, um Ziegenmagermilch zu erhalten;
ii) Unterziehen der Ziegenmagermilch einer Mikrofiltration, um eine molkereduzierte Milchfraktion und eine Molkefraktion zu erhalten;
iii) Unterziehen der molkenreduzierten Milchfraktion einem Erhöhen des Trockenmassefeststoffgehalts, wie auf wenigstens 30 Gew.-%, um ein molkenreduziertes Ziegenmilchkonzentrat zu bilden, wobei Erhöhen des Trockenmassefeststoffgehalts einen Schritt umfasst, ausgewählt aus der Gruppe bestehend aus Zugeben von Kaseinpulver, Zugeben von Sahnepulver, Zugeben von Sahne, Entfernen von Wasser, und einer Kombination davon, wobei das Entfernen von Wasser durch ein Verfahren erfolgt, ausgewählt aus der Gruppe, bestehend aus Verdunstung, Nanofiltration, Umkehrosmose, und Kombinationen davon;
iii) Zugeben von Fett vor oder nach Erhöhen des Trockenmassefeststoffgehalts, um ein Ziegenkäsemilchkonzentrat zu erhalten;
iv) Unterziehen des Ziegenkäsemilchkonzentrats der Ansäuerung, um ein angesäuertes Ziegenkäsemilchkonzentrat bereitzustellen;
v) Unterziehen des angesäuerten Ziegenkäsekonzentrats der Gerinnung in einer Form, um direkt einen Ziegenkäse nach französischer Art zu bilden.

15. Verfahren nach Anspruch 14, wobei Erhöhen des Trockenmassefeststoffgehalts durch Wasserentzug, wie durch Nanofiltration und/oder durch Verdunstung, erreicht wird.

16. Verfahren nach Anspruch 14 oder 15, wobei die Erhöhung des Trockenmassefeststoffgehalts Zugeben von Ziegenkaseinpulver umfasst.

17. Verfahren nach einem der Ansprüche 14 bis 16, wobei die Wasserentfernung auf einen Trockenmassefeststoffgehalt von 35 Gew.-% bis 45 Gew.-% ist.

18. Verfahren nach einem der vorhergehenden Ansprüche, angewendet auf eine Menge von wenigstens 50.000 1 Ziegenmilch pro Tag, wie mehr als 100.000 l/Tag.

19. Verwendung eines Mikrofiltrationsanlage, um die Menge an saurer Molke zu reduzieren, erhalten bei der Herstellung von Ziegenkäse nach französischer Art, wobei Ziegenmagermilch in der Mikrofiltrationsanlage einer Mikrofiltration unterzogen wird, um ein Retentat und ein Permeat zu erhalten, wobei das Retentat einem Käseherstellungsprozess unterzogen wird, umfassend Zugeben von Fett zu dem Retentat, um eine Käsemilchfraktion zu erhalten; Unterziehen der Käsemilchfraktion einer Ansäuerung, um eine angesäuerte Käsemilchfraktion bereitzustellen, Unterziehen der angesäuerten Käsemilchfraktion einer enzymatischen Gerinnung, um eine Käsezusammensetzung zu bilden, umfassend Käsebruch und Molke, und Unterziehen der Käsezusammensetzung einem Abtrennen von Molke, um Ziegenkäse nach französischer Art herzustellen.

20. Verwendung nach Anspruch 19, wobei der Käseherstellungsprozess wie in einem der Ansprüche 1 bis 13 definiert ist.

21. Verwendung nach Anspruch 19 oder 20, wobei der Käseherstellungsprozess mit einer Menge von wenigstens 50.000 1 Ziegenmilch pro Tag, wie mehr als 100.000 l/Tag, durchgeführt wird.

## Revendications

1. Procédé pour la préparation de fromage de chèvre de type français par soumission de lait de chèvre à une acidification jusqu'à un pH inférieur à 5 de façon à fournir du lait de chèvre acidifié ; soumission du lait de chèvre acidifié à une coagulation enzymatique de façon à former une composition de fromage comprenant du caillé et du lactosérum ; soumission de ladite composition de fromage à une séparation du lactosérum de façon à produire du fromage, le procédé comprenant :
i) la soumission du lait de chèvre à un écrémage de façon à obtenir du lait de chèvre écrémé ;
ii) la soumission du lait de chèvre écrémé à une microfiltration de façon à obtenir une fraction lait réduit en lactosérum et une fraction lactosérum ;
iii) l'ajout de matière grasse à la fraction lait réduit en lactosérum de façon à obtenir une fraction lait pour fromage ;
iv) la soumission de la fraction lait pour fromage à ladite acidification de façon à fournir une fraction lait pour fromage acidifiée ;
v) la soumission de la fraction lait pour fromage acidifiée à ladite coagulation de façon à former une composition de fromage comprenant du caillé et du lactosérum restant ;
vi) la soumission de ladite composition de fromage à une séparation du lactosérum restant de façon à produire du fromage de chèvre de type français.

2. Procédé selon la revendication 1, dans lequel l'acidification va jusqu'à un pH inférieur à 4,8, de préférence compris dans un intervalle allant de pH 4 à pH 4,8.

3. Procédé selon la revendication 1 ou 2, dans lequel la coagulation enzymatique comprend l'ajout de présure au lait de chèvre acidifié.

4. Procédé selon n'importe laquelle des revendications précédentes, dans lequel l'acidification comprend l'ajout d'une culture de bactéries fromagères productrices d'acide lactique, par exemple des souches de *Lactococcus lactis* subsp. *lactis* ou *de L. lactis* subsp. *cremoris,* à la fraction lait réduit en lactosérum.

5. Procédé selon n'importe laquelle des revendications précédentes, dans lequel la microfiltration est effectuée sur une membrane de microfiltration ayant une taille de pores comprise dans un intervalle allant de 0,05 µm à 0,25 µm, de préférence de 0,1 µm à 0,2 µm.

6. Procédé selon n'importe laquelle des revendications précédentes, dans lequel la quantité de matière grasse ajoutée à la fraction lait réduit en lactosérum est comprise dans un intervalle allant de 50 % à 150 % en poids de la quantité de matière grasse éliminée par écrémage, par exemple de 70 % en poids à 130 % en poids.

7. Procédé selon la revendication 6, dans lequel la quantité de matière grasse ajoutée à la fraction lait réduit en lactosérum est comprise dans un intervalle allant de 50 % à 80 % de la quantité de matière grasse éliminée par écrémage, ayant ainsi pour résultat un fromage de chèvre de type français pauvre en matière grasse.

8. Procédé selon la revendication 6, dans lequel la quantité de matière grasse ajoutée à la fraction lait réduit en lactosérum est comprise dans un intervalle allant de 120 % à 150 % de la quantité de matière grasse éliminée par écrémage, ayant ainsi pour résultat un fromage de chèvre de type français riche en matière grasse.

9. Procédé selon n'importe laquelle des revendications précédentes, comprenant l'ajout de protéines de lactosérum à la fraction lait réduit en lactosérum préalablement à l'acidification, de préférence dans un intervalle allant jusqu'à 150 % en poids de la fraction lactosérum éliminée par microfiltration.

10. Procédé selon la revendication 9, dans lequel les protéines de lactosérum sont sélectionnées dans le groupe constitué du lactosérum acide, d'un rétentat de lactosérum acide obtenu par soumission de lactosérum acide à une ultrafiltration, d'un rétentat de lactosérum acide obtenu par soumission de lactosérum acide à une nanofiltration, d'un rétentat de lactosérum acide obtenu par soumission de lactosérum acide à une osmose inverse, et de combinaisons de ceux-ci, le lactosérum acide étant de préférence le lactosérum restant obtenu à l'étape (vi).

11. Procédé selon la revendication 9 ou 10, comprenant la dénaturation des protéines de lactosérum, de préférence par chauffage des protéines à une température allant de 80 °C à 90 °C, préalablement à leur ajout à la fraction lait réduit en lactosérum.

12. Procédé selon n'importe laquelle des revendications précédentes, comprenant la soumission du lait de chèvre, de préférence du lait de chèvre écrémé, à une première microfiltration de façon à éliminer des bactéries et des spores, d'où l'obtention d'un filtrat de lait de chèvre purifié et d'un rétentat contenant des bactéries et des spores, et ensuite la soumission du lait de chèvre purifié à ladite microfiltration de façon à obtenir une fraction lait réduit en lactosérum et une fraction lactosérum.

13. Procédé selon n'importe laquelle des revendications précédentes, dans lequel la séparation du lactosérum restant est effectuée par placement de la composition de fromage comprenant du caillé et du lactosérum restant dans des sacs filtrants, la séparation comprenant l'égouttage du lactosérum desdits sacs filtrants par gravité.

14. Procédé pour la préparation de fromage de chèvre de type français par soumission de lait de chèvre à une acidification jusqu'à un pH inférieur à 5 de façon à fournir du lait de chèvre acidifié ; soumission du lait de chèvre acidifié à une coagulation enzymatique, le procédé comprenant :
i) la soumission du lait de chèvre à un écrémage de façon à obtenir du lait de chèvre écrémé ;
ii) la soumission du lait de chèvre écrémé à une microfiltration de façon à obtenir une fraction lait réduit en lactosérum et une fraction lactosérum ;
iii) la soumission de la fraction lait réduit en lactosérum à une augmentation de la teneur en matière sèche solide, par exemple jusqu'à au moins 30 % en poids de façon à former un concentrat de lait de chèvre réduit en lactosérum, l'augmentation de la teneur en matière sèche solide comprenant une étape sélectionnée dans le groupe constitué de l'ajout de caséine en poudre, de l'ajout de crème en poudre, de l'ajout de crème, de l'élimination d'eau, et d'une combinaison de ceux-ci, ladite élimination d'eau étant réalisée par un procédé sélectionné dans le groupe constitué de l'évaporation, de la nanofiltration, de l'osmose inverse, et de combinaisons de celles-ci ;
iii) l'ajout de matière grasse, avant ou après l'augmentation de la teneur en matière sèche solide, de façon à obtenir un concentrat de lait pour fromage de chèvre ;
iv) la soumission du concentrat de lait pour fromage de chèvre à ladite acidification de façon à fournir un concentrat de lait pour fromage de chèvre acidifié ;
v) la soumission du concentrat de lait pour fromage de chèvre acidifié à ladite coagulation dans un moule de façon à former directement un fromage de chèvre de type français.

15. Procédé selon la revendication 14, dans lequel l'augmentation de la teneur en matière sèche solide est accomplie par élimination d'eau, par exemple par nanofiltration et/ou par évaporation.

16. Procédé selon la revendication 14 ou 15, dans lequel l'augmentation de la teneur en matière sèche solide comprend l'ajout de caséine caprine en poudre.

17. Procédé selon n'importe laquelle des revendications 14 à 16, dans lequel l'élimination d'eau va jusqu'à une teneur en matière sèche solide de 35 % en poids à 45 % en poids.

18. Procédé selon n'importe laquelle des revendications précédentes, appliqué à une quantité d'au moins 50 000 L de lait de chèvre par jour, par exemple plus de 100 000 L/jour.

19. Utilisation d'équipement de microfiltration afin de réduire la quantité de lactosérum acide obtenu dans la production de fromage de chèvre de type français, dans laquelle du lait de chèvre écrémé est soumis à une microfiltration dans ledit équipement de microfiltration de façon à obtenir un rétentat et un perméat, le rétentat étant soumis à un processus de fabrication de fromage comprenant l'ajout de matière grasse au rétentat de façon à obtenir une fraction lait pour fromage ; la soumission de la fraction lait pour fromage à une acidification, de façon à fournir une fraction lait pour fromage acidifiée, la soumission de la fraction lait pour fromage acidifiée à une coagulation enzymatique de façon à former une composition de fromage comprenant du caillé et du lactosérum, et la soumission de ladite composition de fromage à une séparation du lactosérum de façon à produire du fromage de chèvre de type français.

20. Utilisation selon la revendication 19, dans laquelle le procédé de fabrication de fromage est tel que défini dans n'importe laquelle des revendications 1 à 13.

21. Utilisation selon la revendication 19 ou 20, dans laquelle le procédé de fabrication de fromage est effectué sur une quantité d'au moins 50 000 L de lait de chèvre par jour, par exemple plus de 100 000 L/jour.
